# EUROPEAN PATENT SPECIFICATION

(11) **EP 0 563 138 B1**
(45) Date of publication and mention of the grant of the patent: **20.03.1996**
(21) Application number: 92901292.0
(22) Date of filing: 16.12.1991
(51) Int. Cl.: A01K 97/06

(54) **A CASE FOR FISHING TACKLES WITH ATTACHMENT FOR IT AND METHOD TO USE IT**
BEHÄLTER FÜR ANGELZUBEHÖR MIT BEFESTIGUNGSVORRICHTUNG UND VERFAHREN ZU SEINER VERWENDUNG
BOITE POUR ATTIRAIL DE PECHE, DISPOSITIF DE FIXATION DE CELUI-CI ET PROCEDE D'UTILISATION

(43) Date of publication of application: 06.10.1993
(73) Proprietor: ERIKSSON, Bertil, S-803 46 Gävle (SE)
(72) Inventor: ERIKSSON, Bertil, S-803 46 Gävle (SE)
(74) Representative: Arwidi, Bengt Dr.
(86) International application number: PCT/SE91/00863
(87) International publication number: WO 92/10931

(56) References cited:
- US-A- 2 691 840
- US-A- 2 699 623
- US-A- 2 767 502
- US-A- 3 484 980

## Description

An angler, who is walking from lake to lake, is anxious to keep his tools in good order and ready, when he reaches the next waterfront. Many anglers keep their lures attached to the line of their fishing rod. Occasionally this means trouble, when the lure comes loose from the rod. Especially during transport with many rods it happens, that lures can cause tangle. This might generate irritation and the fun get lost.

It is in this sector, that rodfishers now get an opportunity to store their lures or baits in a way, that prevents them from coming loose and get entangled.

At the same time manufacturers of lures get an opportunity to pack their products in a useful box, that might be of value for anglers.

### BACKGROUND ART

US-A-2 767 502 discloses a method and a box according to the preamble of claims 1 and 3, respectively.

### DISCLOSURE OF INVENTION

It is characteristic for the invented lure box and the method to use the same, that the box through an uncomplicated hand ling can be taken off or fastened to a fishing rod or pole. To achieve this quality the bottom of the box has been given such a shape, that it fits an attachment, which is glued or taped on the rod.

It is characteristic for the box, that it has a cover, which is hinged on the box. In the gable of the box there is a opening so, that a line or a trace can enter. Other holes could also be needed so, that lures do not get rusty or lines get rotten.

A part of the attachment device is designed to be led into the box or matching openings in the bottom of the box so, that boxes become fastened to a rod. Adapted passages are thus made in the box. Those are to be found in one of the gables and/or along the bottom of the box. To the box is added some kind of arrangement to align the box in parallel to the rod.

In an advantageous design a stick fastened to the rod is used as hook for the box. This stick can proceed through the whole box and for getting a good alignment with the rod even penetrate the other gable. Characteristic for the stick concept is, that the hooking of the box is performed with a pointed device, that will engage the box or along the outer bottom part of the box.

For the alignment of the box along the attachment device some kind of grooves or slits in the box are needed. Is there a penetration of the box from one gable to be used, grooves or slits are made on the inside of the box's bottom. Dovetail slots or the like can instead be found on the outside of the box's bottom if the attachment device has fitting flanges.

Furthermore, there might be some kind of blocking arrangement to prevent the box from slipping off the attachment.

### BRIEF DESCRIPTION OF DRAWINGS

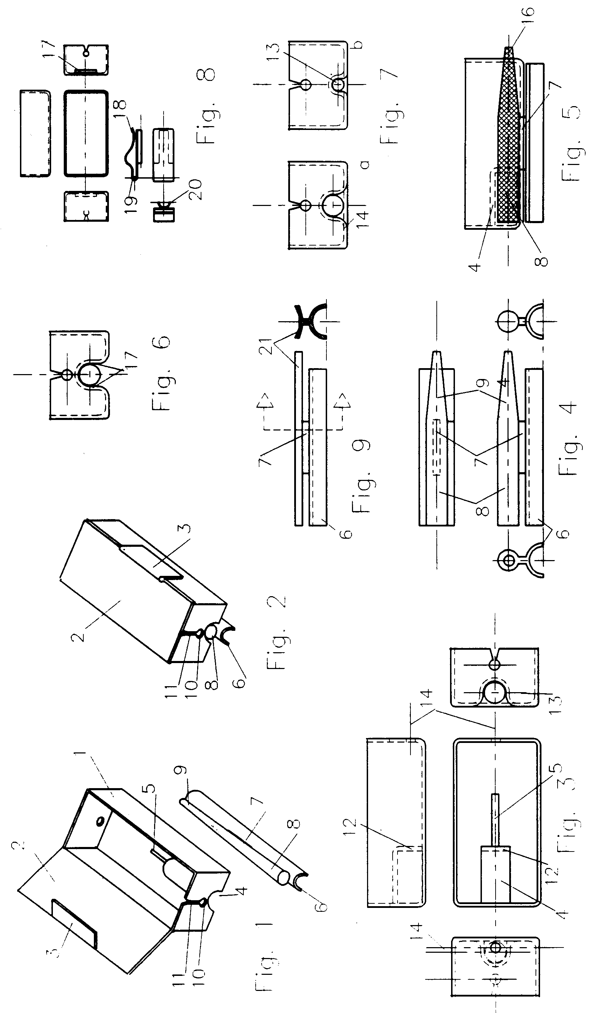

In perspective a box is shown schematically in figure 1, where the box is disconnected from its attachment device. The lid of the box is closed, and an attachment device is put in place in figure 2. Figure 3 is an customary drawing of the box and figure 4 shows one kind of attachment device with a stick. A section of a box mounted on an attachment device is shown in figure 5. One can see some gables of boxes on sticks in figure 6 and 7. An other design of the attachment device with a modified box is shown in figure 8. Finally a modification of the attachment device in figure 4 is shown in figure 9.

### MODE FOR CARRYING OUT THE INVENTION

An advantageous design of the invented box for lures and the like is shown with an open lid in figure 1. The box 1 has a lid 2. On the latter a locking flap 3 can be seen. There is a rise 4 inwards in the bottom of the box, which rise goes from one gable of the box some length into the box. The rise ends with a groove 5. Bellow the box an attachment device for the fastening of the box to a fishing rod is shown. This attachment device consists of half a cylinder 6, one longitudinal beam 7 and above the beam a stick 8. The leading part 9 of the stick is made conical. On the box there is a venthole 10, which over a slit 11 is connected to the brim of the box.

The lid is closed over the box in figure 2. The lid is hinged on one of the long sides of the box. This can be performed in many ways, here a hinge is made when manufacturing box as well as lid. This technique is well know by the skilled man.

In figure 3 some drawing views of a box without lid can be seen. The brim of the box is found rather close to its bottom. This is not characteristic for the invention. The depth of the box can easily be chosen by the skilled man and adapted to the lure's need of volume.

The rise 4 from the bottom is clearly seen in this figure. The groove or slit 5 in the plane part of the bottom is also well displayed. In this figure the length of the rise 4 and the slit 5 has for both been set approximately equal to a third of the box's length. This length relation is however not characteristic for the invention. Men skilled in the art can chose any length relation after the size of the lures, which are to be packed in the box. On some occasions no rise is used as other designs of attachments come to use. In the figure a shift from the bottom of the box to the rise 4 is made with a wall 12 with a hole 13. The width of the hole equals the section of the stick with some clearance. It has been found, that box and stick operate good even without the wall 12, but in such cases it is advisable to make the slit 5 considerably longer.

In figure 4 the stick 8, that over the beam 7 is fastened on half a circular cylinder 6. The latter is supposed to be fastened on a fishing rod, pole or the like by some known method like tape or glue. The pin 8 ends with a conical part 9 to simplify the mounting of the box on the stick.

The cooperation of the two parts, the stick and the box, is shown in figure 5, where the stick has been hatched. One observes, that the height of the beam 7 is a little larger than the thickness of the box's bottom, which gives a secure attachment. The groove or slit 5 in the box is a little longer than the beam 7.

It is characteristic for the invented lure box with attachment device, that the beam orients the box along the rod, and that the conical or pointed part 9 of the stick simplifies the mounting of the box on the attachment device. Men skilled in the art understand, that the box should be mounted with the venthole and adjoining slit 11 facing the point of the rod. The pointed end of the stick will thus face the casting reel or the handle of the rod.

From this alignment follows, that a lure or bait fastened to a line and stored in a box with closed lid will force the box to stay on the attachment device if the line is pulled, which pulling many fishers execute during transport. Also during casting the box will be forced to stay in place by centrifugal forces. Nevertheless some kind of locking device to anchor the box on the stick might be needed. In figure 5 is one example of this shown. The conical part of the stick has been made so long, that it can be guided through a hole 14 in the right gable of the box. This part 16 of the stick is clearly shown in figure 5.

The locking can, as the skilled man understands, be performed by other methods like with grooves in the conical stick facing the bottom of the box. Some rises of the bottom might then form a locking device between the box and the stick. The experienced man can however find other locking methods, which all are covered by the following claims. The experienced man might also use dovetail slots in the box to form a dovetail joint with the beam of the attachment device. This will give a secure fastening and guidance of the box.

Trials with a rise along the whole of the box's bottom have given some good results, but the box have a tendency to turn around a rod if the attachment device is not similar to the one described above. This kind of design is shown in figure 6. The walls 17 of the rise are parallel. Skilled men understand that those walls could be produced in a way so, that they should meet on the opposite side of a rod.

In figure 7 two views of one box's gable is shown. Figure 7a is identical with one of the views in figure 3. One observes, that the bottom of the box is in contact with the stick. In figure 7b the stick has been made thinner which makes it possible to lower the rise 4 in the bottom. The latter design was found to give less stability.

The stick 8 in figure 4, completing the beam 7 of the attachment device and facing the box, can as skilled men understand, be converted to flanges of the beam. This is shown from the side in figure 9, where the upper part of figure 4 shows the same device from above. The flanges 21 could be made in a dovetail shape matching a dovetail slot in the bottom of the box. The pointed part 9 of this dovetail simplifies the mounting of the box on the attachment device.

Keeping the venthole 10 for a line or trace the box can be fastened on a plane attachment device. This is shown in figure 8, which has the same layout as figure 3 and 4. The different views of the box is shown at the top. Here the hole 13 in the first box has been transformed into an elongated opening 17. It is through this opening one leg 18 of the attachment device shall be guided in the box. Preferably now the device is made of plate with a profile, that is shown below the box. The other leg of the device is after a short distance below the box bent to form half a cylinder 20, that in a known way may be fastened to a rod. The lid is not shown in this figure either, as it has no other function but to close the box. It has been shown advantageous to produce the box and the lid in the same operation and in plastics. The chose of compound is left to the experienced.

The beam with its stick 9 or flanges 21 together with the fastening half cylinder 6 is preferably also manufactured in one operation. It is worth while to note, that a possibility to use glue for the fastening on the used plastic must be considered. The half cylinder 6 also has to be flexible enough, so that the attachment device can be used on rods with miscellaneous diameter. Other designs of the attachment device will be covered by the following claims.

The dimensions of the box can be chosen by the skilled man considering the size of the lures or baits, that are supposed to be packed and used during fishing. Big wobblers needs boxes with large volume whereas small spinners or spoons only need boxes of the size 8x4x4 cm.

### INDUSTRIAL APPLICABILITY

The invented box for lures like spinners and wobblers could imply an innovation in the marketing of those products. It is the goal for the inventor that those products by routine shall be packed in this kind of box. With a consistent fixed attachment device on separate rods boxes with different fishing baits should easily be changed on a rod, which simplifies the life for anglers and fishers. Good order in their fishing bags can be maintained, without baits hooking in each other, which today constitute some kind of a plague.

## Claims

1. Method of using a box having a stored lure therewith, wherein the box easily can be fastened on a fishing or casting rod or similar equipment during transport especially between fishing waters **characterized** in that the box is provided with a lid and because of its design with its essentially plane-parallel opposite sides is firstly used in marketing and sales of lures, before it is used during transport in connection with fishing, and wherein the bottom of the box is adapted for releasably fastening the box to fishing equipment by being provided with grooves, which allow the aligning of the box with the equipment in cooperation with an attachment device, which is fixed to the equipment and comprises a cupped part (6), a beam (7) and a pointed device (8 and 9 or 21) for cooperating with the grooves in the bottom of the box and to lock the box on the attachment device, and wherein the side of the box facing the point of the equipment during attachment thereto has an opening defined by a through-hole (10) and a slot (11) extending to the rim of the box, through which opening a line to the lure in the box can leave the same.

2. Method in accordance with claim 1 **characterized in** that the groove in the bottom of the box is a dovetail groove and the beam (7) ends in flanges (21) facing the box designed in dovetails in a way that a dovetail joint can be developed between the box and the flanges.

3. A Box for lures and for co-operating with a matching attachment device, wherein the box is firstly used during transport from supplier and then during transport in connection with fishing is releasably attachable to fishing or casting rods or similar equipment, the box is provided with a lid and has essentially plane-parallel opposite sides, the lid (2) being hinged at the box rim, **characterized** in that in the bottom of the box, grooves (5) are provided, which are suitable to align the box with the equipment and which are suitable to cooperate with an attachment device, which is fixed to the equipment, the attachment device comprising a cupped part (6), a beam (7) and a pointed device (8 and 9 or 21) for co-operating with the grooves in the bottom of the box and to lock the box on the attachment device, and wherein the side of the box facing the point of the equipment during attachment thereto, has an opening defined by a through-hole (10) and by a slot (11) extending to the rim of the box, through which opening a line to the lure in the box can leave the same.

4. A Box for lures and for co-operating with a matching attachment device in accordance with claim 3 **characterized** in that the groove in the bottom of the box is a dovetail groove and the beam (7) ends in flanges (21) facing the box designed in dovetails in a way that a dovetail joint can be developed between the box and the flanges.

## Patentansprüche

1. Verfahren zur Verwendung einer Schachtel, in der ein Köder aufgenommen ist, wobei die Schachtel leicht während des Transports, besonders zwischen Fischgründe, an einer Angelrute oder dergleichen befestigt werden kann, dadurch gekennzeichnet, daß die Schachtel mit einer Lippe versehen ist und wegen ihres Designs mit im wesentlichen parallelen, einander gegenüberliegenden Seiten zuerst zum Anbieten und Verkauf von Ködern benutzt wird, ehe sie im Transport in Zusammenhang mit Angeln verwendet wird, und wobei der Boden der Schachtel für eine lösbare Befestigung an der Angelausrüstung eingerichtet ist, indem Nuten angebracht werden, die das Ausrichten der Schachtel gegenüber der Angelausrüstung erlauben im Zusammenspiel mit einer Befestigungseinrichtung, die an der Angelausrüstung befestigt ist und eine Aufnahme (6), einen Steg (7) und ein zulaufendes Bauteil (8 und 9 oder 21) zum Zusammenwirken mit den Nuten im Boden der Schachtel aufweist, um die Schachtel auf der Befestigungseinrichtung zu verankern, und wobei in der Seite der Schachtel, die in befestigtem Zustand zur Spitze der Angelausrüstung weist, ein durch eine Öffnung festgelegtes Durchgangsloch (10) und einen Schlitz (11), der zum Rand der Schachtel verläuft, angeordnet sind, wobei durch diese Öffnung eine Schnur zu dem Köder in der Schachtel diese Schachtel verlassen kann.

2. Verfahren nach Anspruch 1, dadurch gekennzeichnet, daß die Nut im Boden der Schachtel eine Schwalbenschwanz-Nut ist und der Steg (7) in Flansche (21) ausläuft, die den Schwalbenschwanz-Nuten der Schachtel zugewandt sind derart, daß eine Schwalbenschwanz-Verbindung zwischen den Flanschen und der Box hergestellt werden kann.

3. Schachtel für Köder und zum Zusammenwirken mit einer zugehörigen Befestigungseinrichtung, in der ein Köder aufgenommen ist, wobei die Schachtel zuerst während des Transports vom Händler und dann während des Transports im Zusammenhang mit dem Angeln lösbar an Angelruten oder dergleichen befestigbar ist, dadurch gekennzeichnet, daß die Schachtel mit einer Lippe versehen ist und im wesentlichen parallelen, einander gegenüberliegenden Seiten aufweist, wobei die Lippe an der Kante der Schachtel (1) angelenkt ist, dadurch gekennzeichnet, daß im Boden der Schachtel Nuten vorgesehen sind, die geeignet sind, die Schachtel gegenüber der Angelausrüstung (2) auszurichten, und die weiter geeignet sind, mit einer Befestigungseinrichtung zusammenzuwirken, die an der Angelausrüstung befestigt ist, wobei die Befestigungseinrichtung eine Aufnahme (6), einen Steg (7) und ein zulaufendes Bauteil (8 und 9 oder 21) zum Zusammenwirken mit den Nuten im Boden der Schachtel und zum Befestigen der Schachtel auf der Befestigungseinrichtung aufweist, und wobei die Seite der Schachtel, die in befestigtem Zustand zur Spitze der Angelausrüstung weist, ein durch eine Öffnung festgelegtes Durchgangsloch (10) und einen Schlitz (11), der zum Rand der Schachtel verläuft, aufweist.

4. Schachtel für Köder und zum Zusammenwirken mit einer zugehörigen Befestigungseinrichtung nach Anspruch 3, dadurch gekennzeichnet, daß die Nut im Boden der Schachtel eine Schwalbenschwanz-Nut ist und der Steg (7) in Flansche (21) ausläuft, die den Schwalbenschwanz-Nuten der Schachtel zugewandt sind derart, daß eine Schwalbenschwanz-Verbindung zwischen den Flanschen und der Box hergestellt werden kann.

## Revendications

1. Procédé d'utilisation d'une boîte comportant un leurre logé dans celle-ci, la boîte pouvant être facilement attachée à une canne pour la pêche à la ligne ou la pêche au lancer ou un équipement similaire pendant le transport notamment entre des eaux où l'on peut pêcher, caractérisé en ce que la boîte est munie d'un couvercle et, du fait de la conformation de celle-ci qui comprend essentiellement des côtés opposés plans parallèles, cette boîte est utilisée d'abord pour la mise sur la marché et la vente de leurres, avant d'être utilisée au cours d'un transport concernant la pêche, le fond de la boîte étant adapté pour attacher de façon libérale la boîte à un équipement de pêche en étant munie de rainures, qui permettent l'alignement de la boîte avec l'équipement par coopération avec un dispositif d'accrochage, qui est fixé à l'équipement et comprend une partie (6) en forme de coupelle, un barreau (7) et un dispositif pointu (8 et 9 ou 21) pour coopérer avec les rainures dans le fold de la boîte et pour bloquer la boîte sur le dispositif d'accrochage, le côté de la boîte faisant face à la pointe de l'equipement pendant qu'elle y est accrochée comportant une ouverture délimitée par un trou de passage (10) et une fente (11) s'étendant jusqu'au bord de la boîte, une ligne du leurre logé dans la boîte pouvant quitter celle-ci à travers ladite ouverture.

2. Procédé selon la revendication 1, caractérisé en ce que la rainure ménagée dans le fond de la boîte est une rainure en queue d'aronde et le barreau (7) se termine par des flasques (21) faisant face à la boîte mise en forme avec une queue d'aronde de manière qu'une jonction à queue d'aronde puisse être établie entre la boîte et les flasques.

3. Boîte pour leurres destinée à coopérer avec un dispositif d'accrochage complémentaire, dans lequel la boîte est d'abord utilisée pendant le transport depuis un fournisseur puis pendant le transport concernant la pêche, cette boîte étant accrochée de façon détachable à des cannes pour pêche à la ligne ou au lancer ou un équipement similaire, la boîte étant munie d'un couvercle et comportant des côtés opposés sensiblement parallèles et plans, le couvercle (2) étant articulé sur le bord de la boîte, caractérisé en ce que des rainures (5) sont ménagées dans le fond de la boîte, lesquelles sont capables d'aligner la boîte avec l'équipement et sont capables de coopérer avec un dispositif d'accrochage, qui est fixé à l'équipement, le dispositif d'accrochage comprenant une partie (6) en forme de coupelle, un barreau (7) et un dispositif pointu (8 et 9 ou 21) pour coopérer avec les rainures dans le fond de la boîte et pour bloquer la boîte sur le dispositif d'accrochage, le côté de la boîte faisant face à la pointe de l'équipement pendant qu'elle y est accrochée comportant une ouverture délimitée par un trou de passage (10) et par une fente (11) s'étendant jusqu'au bord de la boîte, une ligne du leurre logé dans la boîte pouvant quitter celle-ci à travers ladite ouverture.

4. Boîte pour leurres destinée à coopérer avec un dispositif d'accrochage complémentaire selon la revendication 3, caractérisée en ce que la rainure ménagée dans le fond de la boîte est une rainure en queue d'aronde et le barreau (7) se termine par des flasques (21) faisant face à la boîte mise en forme avec une queue d'aronde de manière qu'une jonction à queue d'aronde puisse être établie entre la boîte et les flasques.
